(19) Europäisches Patentamt
European Patent Office
Office européen des brevets

(11) Publication number: **0 109 223**
**B1**

(12) # EUROPEAN PATENT SPECIFICATION

(45) Date of publication of patent specification: **22.07.87**

(51) Int. Cl.$^4$: **H 01 M 10/36**

(21) Application number: **83306620.2**

(22) Date of filing: **31.10.83**

(54) **Electrolyte for zinc-bromine storage batteries.**

(30) Priority: **02.11.82 JP 191875/82**
**04.11.82 JP 192520/82**

(43) Date of publication of application:
**23.05.84 Bulletin 84/21**

(45) Publication of the grant of the patent:
**22.07.87 Bulletin 87/30**

(84) Designated Contracting States:
**DE FR GB**

(56) References cited:
**FR-A-2 160 551**
**FR-A-2 160 622**
**FR-A-2 347 787**
**FR-A-2 347 788**
**GB-A-2 005 064**
**US-A-4 065 601**
**US-A-4 306 003**

(73) Proprietor: **KABUSHIKI KAISHA MEIDENSHA**
**MEIDENSHA ELECTRIC MFG. CO., LTD.**
**1-17 Osaki-2-chome**
**Shinagawa-ku Tokyo (JP)**

(72) Inventor: **Ando, Yasuo**
**5-10-9 Kamirenjaku**
**Mitaka-shi Tokyo (JP)**
Inventor: **Ochiai, Toshihiko**
**3-29-10 Omorinaka Ota-ku**
**Tokyo (JP)**
Inventor: **Fujie, Shinichi**
**2-5-10 Osaki Shinagawa-ku**
**Tokyo (JP)**

(74) Representative: **Burnside, Michael et al**
**Michael Burnside & Partners 2 Serjeants' Inn**
**Fleet Street**
**London EC4Y 1HL (GB)**

**EP 0 109 223 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to an electrolyte for use in electrolyte circulation-type zinc-bromine storage batteries and more particularly to the composition of a negative electrolyte capable of inhibiting the formation of zinc dendrites.

Zinc-bromine storage batteries have been studied and developed from old times for their use in practical applications in view of their high energy densities and in recent years their development for practical applications has been spotlighted again from the standpoint of effective energy utilization. For instance, in Fig. 1 showing basic construction of an electrolyte circulation-type zinc-bromine storage battery, numeral 1 designates a unit cell, 2 a positive electrode chamber, 3 a negative electrode chamber, 4 a separator (e.g., an ion exchange membrane or fine porous membrane separator), 5 a positive electrode, 6 a negative electrode, 7 a positive electrolyte, 8 a negative electrolyte, 9 a positive electrolyte storage tank, 10 a negative electrolyte storage tank, and 11 and 12 pumps.

With this type of electrolyte circulation-type zinc-bromine storage battery, as shown in Fig. 2, during the charge the zinc deposited on the surface of the negative electrode 6 designated at ⊖ in the Figure frequently tends to become uneven and cause the formation of tree-like crystals or so-called dendrites 13 due to nonuniformity of the electric field and disturbance in the flow of the negative electrolyte in the vicinity of the negative electrode surface, and in particular the following problems will be caused as the number of charge and discharge cycles is increased. The deposited dendritic zinc is very fragile so that it tends to fall off the electrode, and deteriorate the energy efficiency of the battery. Even if the dendrites do not fall off the electrode, the dendrite 13 continues to grow in a branching form so that it penetrates and breaks the separator 4 and a short-circuit is formed between it and the positive electrode 5 thus eventually causing damage to the battery.

While various kinds of inhibitors, such as, nonionic surface active agents, zinc electrochemical plating brighteners, etc., have been used for the purpose of preventing the above-mentioned dendrite formation, due to the fact that these agents have relatively small effects when used singly and that an inexpensive fine porous membrane is usually used for the separator 4, during the charge the bromine produced at the positive electrode penetrates through the fine-porous membrane separator and diffuses within the negative electrode chamber. As a result, from the standpoint of resistance to the bromine there are problems that the dendrite inhibitor is gradually decomposed due to the strong oxidation of the bromine making it impossible to maintain the stable performance for the cyclic use over a long period of time and so on. In addition, as compared with the lead storage battery, an electrical resistance of the electrolyte is large in the zinc-bromine storage battery so that while many different kinds of electrolyte additives have been conceived for improving the voltage efficiency, their use in practical applications has required that the proper concentration of each of such additives be grasped in consideration of the interaction with the dendrite inhibitor used.

GB—A—2005064 discloses the use of lower alkyl ($C_1$—$C_3$) quaternary ammonium compounds as bromine-complexing agents. FR—A—2347787 discloses the use of $C_1$—$C_8$ alkyl pyridinium or morpholinium compounds as bromine-complexing agents in zinc bromide or calcium bromide electrolytes. US—A—4306003 discloses the use of lead salts as additives for zinc chloride electrolytes.

The inventors have investigated the causes for the formation of dendrites in electrolyte circulation-type zinc-bromine storage batteries and have discovered and invented a negative electrolyte composition capable of suppressing the formation of dendrites during the charging of zinc-bromine storage batteries as the result of repeated tests performed by adding to the negative electrolyte mixtures of the negative electrolyte active material, i.e., zinc bromide, specific amounts of various bromine complexing agents and suitable amounts of various dendrite inhibitors and electric conductivity improvers in accordance with the results of the investigations.

It is the primary object of the present invention to provide a novel negative electrolyte composition which overcomes the most serious disadvantage of the zinc-bromine storage batteries, i.e., the formation and growth of dendrites and ensures its cyclic use over a long period of time.

In accordance with an embodiment of the invention there is thus provided a negative electrolyte for electrolyte circulation-type zinc bromine storage batteries comprising a mixture of zinc bromide as active material, with (a) a bromine-complexing agent comprising at least one of methyl ethyl morpholinium bromide and methyl ethyl pyrrolidinium bromide and (b) a dendrite inhibitor.

According to the invention, the dendrite inhibitor comprises a combination of (i) a quaternary morpholinium, pyridinium, pyrrolidinium or ammonium salt having at least one butyl, decyl, dodecyl or benzyl group, with (ii) bivalent lead ions, and (iii) bivalent tin ions.

In accordance with another embodiment of the invention there is provided a negative electrolyte which additionally contains an electrical conductivity improver comprising potassium chloride and/or ammonium chloride.

In the accompanying Drawings:

Fig. 1 is a schematic diagram showing a basic construction of an electrolyte circulation-type zinc-bromine storage battery.

Fig. 2 is a schematic diagram showing the manner of growth of dendrites.

In this invention, zinc bromide ($ZnBr_2$) is used as the active material of a negative electrolyte in an

electrolyte circulation-type zinc-bromine storage battery and this zinc bromide plays the principal role in the electrochemical reaction. Since the zinc bromide decreases from 3 mol/1—1 mol/during the charge, its most preferable concentration before the charge is 3 mol/l since the concentration of less than 1 mol/l is not practical. Added further is a bromine complexing agent which serves the function of preventing the deterioration of the battery system on the whole due to the strong oxidation property of the bromine which is generated at the positive electrode, penetrates through the fine-porous membrane separator and diffuses toward the negative electrode. Heterocyclic quaternary ammonium salts having the following constitutions are effective as the bromine complexing agents. Methyl ethyl morpholinium bromide

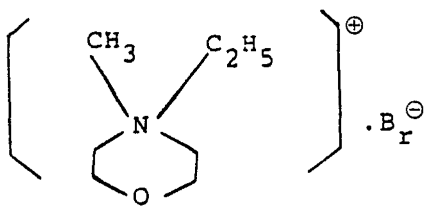

and methyl ethyl pyrrolidinium bromide

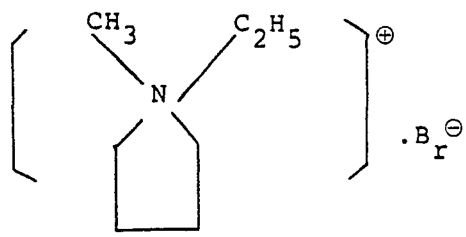

Experiments conducted by adding 1 mol/l of either one of these agents to the negative electrolyte have shown that there is the effect of reducing the ill effects of the bromine diffused from the positive electrode and that this effect is improved by using a mixture of the two agents.

In addition to the above-mentioned two bromine complexing agents, the negative electrolyte of this invention has, added to the zinc bromide active material, a dendrite inhibitor comprising, for example, one of twelve additives a) to l) having the following quaternary ammonium salt constitutions. More specifically, the additives are quaternary ammonium salts of ammonia morpholine, pyridine or pyrrolidine, which quaternary ammonium salts have one or more of the groups $—C_4H_9$, $—C_{10}H_{21}$, $—C_{12}H_{25}$ and

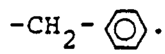

It has been discovered that the addition in a specified amount of one of these additives results in a negative electrolyte that ensures a practical cyclic operation with reduced dendrite formation which is one of the objects of the invention.

The kinds, constitutional formulas and specified contents of the dendrite inhibitors a) to l) are as follows.

a) Methyl dodecyl morpholinium bromide added in an amount from $1 \times 10^{-4}$ mol/l to $1 \times 10^{-2}$ mol/l

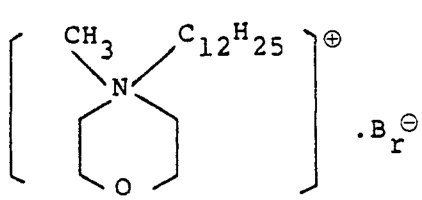

b) Methyl decyl morpholinium bromide added in an amount from $1 \times 10^{-3}$ mol/l to $5 \times 10^{-2}$ mol/l

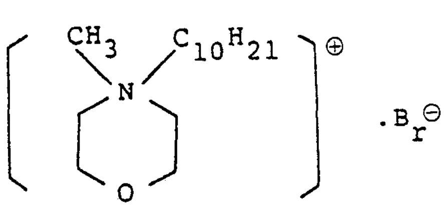

c) Trimethyl dodecyl ammonium bromide added in an amount from $1 \times 10^{-3}$ mol/l to $1 \times 10^{-2}$ mol/l

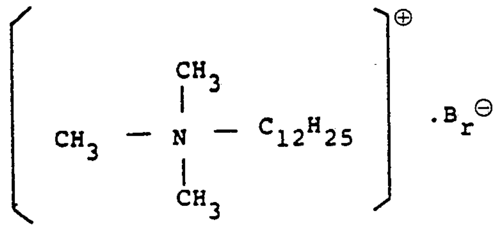

d) Trimethyl decyl ammonium bromide added in an amount from $1 \times 10^{-3}$ mol/l to $5 \times 10^{-2}$ mol/l

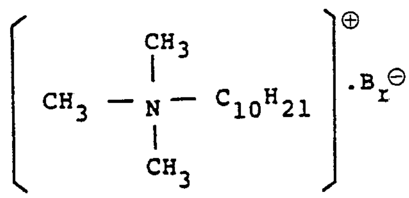

e) Dimethyl benzyl dodecyl ammonium bromide added in an amount from $1 \times 10^{-5}$ mol/l to $1 \times 10^{-4}$ mol/l

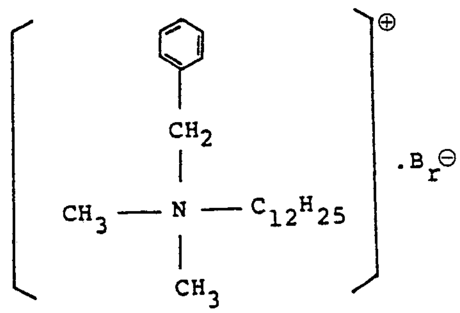

f) Dimethyl benzyl decyl ammonium bromide added in an amount from $1 \times 10^{-5}$ mol/l to $1 \times 10^{-4}$ mol/l

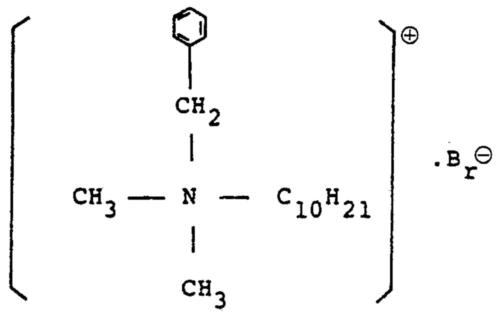

g) Tetra butyl ammonium bromide added in an amount from $1 \times 10^{-3}$ mol/l to $3 \times 10^{-2}$ mol/l

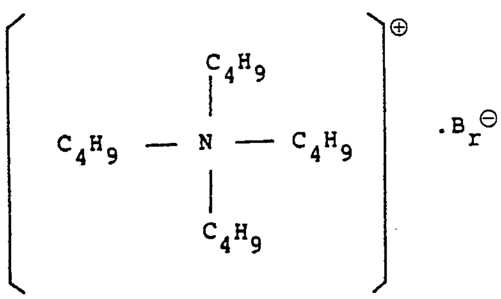

h) Tributyl benzyl ammonium bromide added in an amount from 5 × $10^{-5}$ mol/l to 1 × $10^{-4}$ mol/l

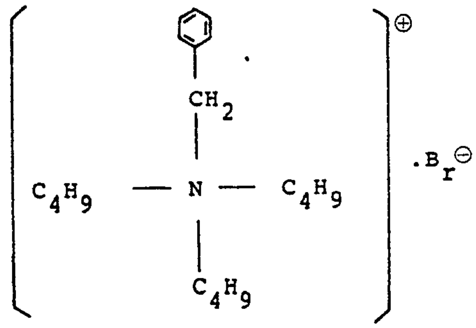

i) Dodecyl pyridinium bromide added in a saturation amount

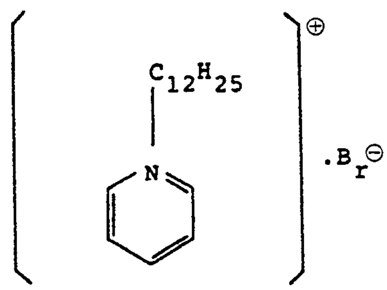

j) Decyl pyridinium bromide added in a saturation amount

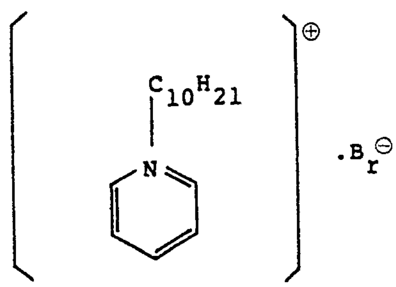

k) Dodecyl methyl pyrrolidinium bromide added in a saturation amount

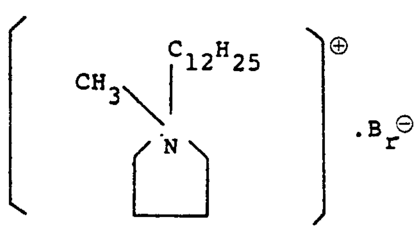

l) Decyl methyl pyrrolidinium bromide added in a saturation amount

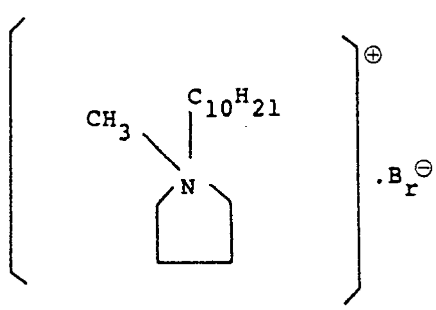

Also, it has been discovered that the addition of less than the saturation amount of bivalent tin ions ($Sn^{2+}$) in the form of a salt of $SnCl_2$, $SnBr_2$, $SnSO_4$ or the like and of $1 \times 10^{-5}$ mol/l to less than the saturation amount of bivalent lead ions ($Pb^{2+}$) in the form of a salt of $PbCl_2$, $PbBr_2$, $PbSO_4$ or the like to the methyl dodecyl morpholinium bromide of a) and the methyl decyl morpholinium bromide of b) which have exhibited excellent properties as the dendrite inhibitors in the charge and discharge tests and the performance tests which will be described later, results in a negative electrolyte which is capable of not only preventing the occurrence of dendrites but also electrodepositing the zinc smoothly on the electrode over a large number of charging and discharging cycles.

Further, in order to improve the voltage efficiency of the above-described negative electrolyte composition, 3 mol/l or less of potassium chloride (KCl) and/or 4 mol/l or less of ammonium chloride is added as a conductivity improver and also the pH of the electrolyte is maintained 4 or less and the liquid temperature is maintained between $-20°$ and 60°C, thereby substantially completely eliminating the formation of dendrites on the negative electrode, producing a lustrous electrodeposited surface on the negative electrode and maintaining the initial condition in the practical operation.

Some examples of the invention will now be described.

Example 1

Negative electrolytes for an electrolyte circulation-type zinc-bromine storage battery such as shown in Fig. 1 were prepared by adding one of the previously mentioned dendrite inhibitors (a) and (b) to stock negative electrolytes for an electrolyte circulation-type zinc-bromine storage battery each containing 3 mol/l of zinc bromide, 0.5 mol/l of either methyl ethyl morpholinium bromide and methyl ethyl pyrrolidinium bromide as bromine complexing agents, and KCl and $NH_4Cl$ as electrical conductivity improvers as shown in the following Table. Then, using each of the prepared electrolytes, a battery was charged for 8 hours with a current density of 30mA/cm$^2$ to deposit zinc on a carbon plastic electrode having an effective electrode area of 400 cm$^2$ and the resulting electrodeposited surface conditions were observed and evaluated in accordance with the following criteria:

A: No formation of dendrites with the smooth electrodeposited surface.

B: Formation of small amount of dendrites with the relatively smooth electrodeposited surface.

C: Formation of large amount of dendrites with the non-uniform electrodeposited surface.

Note that the mark "+" at the right upper side of A, B and C denotes a better evaluation. The mark "−" denotes a slightly inferior evaluation.

The results of these tests are shown in the following Table. As will be seen from the appended reference photographs 1 and 2 showing respectively the electrodeposited surfaces of the test cases 14—8 and 14—9, the addition of 2 mol/l of ammonium chloride as the conductivity improver (the photograph 1) produces a smooth electro-deposited surface and the addition of 3 mol/l of ammonium chloride (the photograph 2) produced an electrodeposited surface with minute roughness.

TABLE
Evaluation of electrodeposited surface conditions produced by various electrolyte compositions

| Item / Test No. | Dendrite inhibitor content (mol/l) | | | | Conductivity improver (mol/l) | | Electrodeposited surface condition | Evaluation |
|---|---|---|---|---|---|---|---|---|
| | $Sn^{2+}$ | $Pb^{2+}$ | a | b | Kcl | $NH_4Cl$ | | |
| Comparative example | — | — | — | — | — | — | Formation of dendrites on entire surface | C |
| 13-1 | $5\times10^{-4}$ | $1\times10^{-5}$ | $1\times10^{-3}$ | — | — | — | Formation of small amount of dendrites | B |
| 2 | 〃 | $5\times10^{-5}$ | 〃 | — | — | — | | $A^+$ |
| 3 | 〃 | $1\times10^{-4}$ | 〃 | — | — | — | | $A^+$ |
| 4 | 〃 | $5\times10^{-4}$ | 〃 | | | | | $A^+$ |
| 5 | $5\times10^{-4}$ | $5\times10^{-4}$ | $3\times10^{-3}$ | — | — | — | | $A^+$ |
| 6 | 〃 | 〃 | $5\times10^{-3}$ | — | — | — | | $A^+$ |
| 7 | 〃 | 〃 | $1\times10^{-4}$ | — | — | — | Small amount of dendrites | B |
| 8 | 〃 | 〃 | $5\times10^{-4}$ | — | — | — | | $A^+$ |
| 9 | 〃 | 〃 | $1\times10^{-2}$ | — | — | — | | B |

TABLE (continued)

| Item / Test No. | Dendrite inhibitor content (mol/l) | | | | Conductivity improver (mol/l) | | Electrodeposited surface condition | Evaluation |
|---|---|---|---|---|---|---|---|---|
| | $Sn^{2+}$ | $Pb^{2+}$ | a | b | Kcl | $NH_4Cl$ | | |
| 10 | $5\times10^{-4}$ | $5\times10^{-4}$ | — | $1\times10^{-3}$ | — | — | | B |
| 11 | 〃 | 〃 | — | $5\times10^{-3}$ | — | — | | $A^+$ |
| 12 | 〃 | 〃 | — | $1\times10^{-2}$ | — | — | | $A^+$ |
| 13 | 〃 | 〃 | — | $5\times10^{-2}$ | — | — | Blacked electro-deposited surface | B |
| 14-1 | $5\times10^{-4}$ | $5\times10^{-4}$ | $1\times10^{-3}$ | — | 1 | — | | $A^+$ |
| 2 | 〃 | 〃 | 〃 | — | 2 | — | | $A^+$ |
| 3 | 〃 | 〃 | 〃 | — | 3 | — | Kcl Precipitation in negative electrolyte | C |
| 4 | 〃 | 〃 | 〃 | — | 〃 | 1 | | $A^+$ |
| 5 | 〃 | 〃 | 〃 | — | 〃 | 2 | | $A^+$ |
| 6 | 〃 | 〃 | 〃 | — | 〃 | 3 | | $A^+$ |

TABLE (continued)

| Item / Test No. | Dendrite inhibitor content (mol/l) | | | | Conductivity improver (mol/l) | | Electrodeposited surface condition | Evaluation |
|---|---|---|---|---|---|---|---|---|
| | $Sn^{2+}$ | $Pb^{2+}$ | a | b | Kcl | $NH_4Cl$ | | |
| 14-7 | $5\times10^{-4}$ | $5\times10^{-4}$ | $1\times10^{-3}$ | — | 3 | 4 | Roughened electro-deposited surface | B |
| 8 | 〃 | $5\times10^{-5}$ | $3\times10^{-3}$ | — | — | 2 | | $A^+$ |
| 9 | 〃 | 〃 | 〃 | — | — | 3 | | $A^+$ |

From the results shown in the Table it will be seen that the charge and discharge tests conducted by using the zinc-bromine storage battery negative electrolytes each containing an active material or zinc bromide of a fixed concentration, methyl ethyl morpholinium bromide and methyl ethyl pyrrolidinium bromide of fixed concentrations as bromine complexing agents, $Sn^{2+}$ and $Pb^{2+}$ as dendrite inhibitors, one or the other of the previously mentioned quaternary ammonium bromides, i.e., the methyl dodecyl morpholinium bromide (a) and the methyl decyl morpholinium bromide (b) and potassium chloride and ammonium chloride of varying contents as conductivity improvers, eliminated the formation of dendrites and allowed the observation of smooth electrodeposited surfaces on the negative electrode surface within the specified ranges of concentrations (the test electrolytes evaluated as $A^+$). As a result, the composition ranges of the negative electrolytes are specified. By virtue of the specified composition ranges of the negative electrolytes, the formation of dendrites was prevented and the smooth electrodeposition of zinc on the negative electrode surface was effected. In addition, the results of the service tests conducted by using the negative electrolytes of the specified composition ranges showed that there were no problems and the utility of these electrolytes was proved even after 20 cycles of the charge and discharge test. It was also proved under the operating conditions that the most satisfactory results were obtained in the cases where the pH value in the negative electrolytes was 4 or less and the liquid temperature was in the range from −20°C to 60°C.

Example 2

In this example, the similar apparatus as used in the Example 1 was used and the negative electrolyte used contained the same zinc bromide and bromine complexing agents as used in the Example 1 as well as $1 \times 10^{-4}$ mol/l of $Pb^{2+}$, $5 \times 10^{-4}$ mol/l of $Sn^{2+}$ and $3 \times 10^{-3}$ mol/l of methyl dodecyl morpholinium bromide as a dendrite inhibitor and 2 mol/l of ammonium chloride as a conductivity improver. The 8-hour charge and discharge cycle test with a current density of 40 mA/cm$^2$ was repeated with the result that the same electrodeposited surface as at the beginning was maintained even after over 20 cycles and the utility of the electrolyte was proved.

From the foregoing description it will be seen that when the negative electrolyte according to the invention is used in a zinc-bromine storage battery, there is practically no danger of causing the formation of dendrites and the production of a smooth electrodeposited surface is ensured without any deterioration of the efficiency and the life. Thus, the negative electrolyte is useful in that the conventional electrical resistance of negative electrolyte of as high as 10 to 20Ωcm is reduced to several to 10Ωcm by the combination of various additives and the problem of a reduced efficiency due to the electrical resistance of negative electrolyte is overcome thereby making possible the practical use of the electrolyte.

Thus, by using the negative electrolyte according to the invention in an electrolyte circulation-type zinc-bromine storage battery for multiple charge and discharge cyclic purposes, there is the effect that not only the formation of dendrites on the negative electrode is prevented satisfactorily but also the danger of any decomposition of additive due to the strong oxidizing property of the bromine penetrating and diffusing into the negative electrode chamber through the fine-porous membrane separator during the charge is eliminated owing to the dendrite inhibitors themselves being quaternary ammonium salts and this, coupled with the addition of the bromine complexing agents, has the effect of causing the bromine molecules to trap as polyhalides thereby improving the battery efficiency.

**Claims**

1. A negative electrolyte for an electrolyte circulation-type zinc-bromine storage battery comprising a mixture of zinc bromide as active material with (a) a bromine-complexing agent comprising at least one of methyl ethyl morpholinium bromide and methyl ethyl pyrrolidinium bromide and (b) a dendrite inhibitor, characterised in that said dendrite inhibitor comprises a combination of (i) a quaternary morpholinium, pyridinium, pyrrolidinium or ammonium salt having at least one butyl, decyl, dodecyl or benzyl group, with (ii) bivalent lead ions, and (iii) bivalent tin ions.

2. A negative electrolyte according to Claim 1 characterised in that said quaternary salt in said dendrite inhibitor comprises methyl dodecyl morpholinium bromide, methyl decyl morpholinium bromide, trimethyl dodecyl ammonium bromide, trimethyl decyl ammonium bromide, dimethyl benzyl dodecyl ammonium bromide, dimethyl benzyl decyl ammonium bromide, tetrabutyl ammonium bromide, tributyl benzyl ammonium bromide, dodecyl pyridinium bromide, decyl pyridinium bromide, dodecyl methyl pyrrolidinium bromide or decyl methyl pyrrolidinium bromide.

3. A negative electrolyte according to Claim 2, characterised in that said quaternary salt is present in said dendrite inhibitor in an amount as follows:

| | |
|---|---|
| Methyl dodecyl morpholinium bromide | $1 \times 10^{-4}$ mol/l to $1 \times 10^{-2}$ mol/l |
| Methyl decyl morpholinium bromide | $1 \times 10^{-3}$ mol/l to $5 \times 10^{-2}$ mol/l |
| Trimethyl dodecyl ammonium bromide | $1 \times 10^{-3}$ mol/1 to $1 \times 10^{-2}$ mol/l |
| Trimethyl decyl ammonium bromide | $1 \times 10^{-3}$ mol/l to $5 \times 10^{-2}$ mol/l |
| Dimethyl benzyl dodecyl ammonium bromide | $1 \times 10^{-5}$ mol/l to $1 \times 10^{-4}$ mol/l |
| Dimethyl benzyl decyl ammonium bromide | $1 \times 10^{-5}$ mol/l to $1 \times 10^{-4}$ mol/l |
| Tetra butyl ammonium bromide | $1 \times 10^{-3}$ mol/l to $3 \times 10^{-2}$ mol/l |
| Tributyl benzyl ammonium bromide | $5 \times 10^{-5}$ mol/l to $1 \times 10^{-4}$ mol/l |
| Dodecyl pyridinium bromide | Saturation amount |
| Decyl pyridinium bromide | Saturation amount |
| Dodecyl methyl pyrrolidinium bromide | Saturation amount |
| Decyl methyl pyrrolidinium bromide | Saturation amount |

4. A negative electrolyte according to any preceding Claim characterized in that said dendrite inhibitor comprises methyl dodecyl morpholinium bromide or methyl decyl morpholinium bromide and $Sn^{2+}$ and $Pb^{2+}$.

5. A negative electrolyte according to any preceding Claim characterized in that said dendrite inhibitor further comprises an electrical conductivity improver.

6. A negative electrolyte according to Claim 5 characterised in that said conductivity improver comprises at least one of potassium chloride and ammonium chloride.

7. A negative electrolyte according to any preceding Claim characterized in that said dendrite inhibitor comprises less than a saturation amount of $Sn^{2+}$, from $1 \times 10^{-5}$ mol/l to less than a saturation amount of $Pb^{2+}$, and from $1 \times 10^{-4}$ mol/l to $1 \times 10^{-2}$ mol/l of methyl dodecyl morpholinium bromide or from $1 \times 10^{-3}$ mol/l to $5 \times 10^{-2}$ mol/l of methyl decyl morpholinium bromide.

8. A negative electrolyte according to Claim 7, characterised in that said electrical conductivity improver comprises 3 mol/l or less of potassium chloride and 4 mol/l or less of ammonium chloride.

**Patentansprüche**

1. Negativer Elektrolyte für eine Zink-Brom-Speicherbatterie mit Elektrolyt-Zirkulation, welcher eine Mischung aus Zink-Bromid als aktives Material enthält, mit (a) einem Brom-Komplexbildner, der mindestens eine der Substanzen Methylethylmorpholinbromid und Methylethylpyrrolidinbromid enthält, und (b) einem Dendritinhibitor, dadurch gekennzeichnet, daß der Dendritinhibitor eine Zusammensetzung von (i) einem quaternären Morpholin-, Pyridin-, Pyrrolidin- oder Ammoniumsalz, das mindestens eine Butyl-, Dezyl-, Dodezyl- oder Benzylgruppe aufweist, mit (ii) zweiwertigen Bleiionen und (iii) zweiwertigen Zinnionen aufweist.

2. Negativer Elektrolyt nach Anspruch 1, dadurch gekennzeichnet, daß das quaternäre Salz in dem Dendritinhibitor Methyldodezylmorpholinbromid, Methyldezylmorpholinbromid, Trimethyldodezylammoniumbromid, Trimethyldezylammoniumbromid, Dimethylbenzyldodezylammoniumbromid, Dimethylbenzyldezylammoniumbromid, Tetrabutylammoniumbromid, Tributylbenzylammoniumbromid, Dodezylpyridinbromid, Dezylpyridinbromid, Dodezylmethylpyrrolodinbromid oder Dezylmethylpyrrolodinbromid aufweist.

3. Negativer Elektrolyt nach Anspruch 2, dadurch gekennzeichnet, daß das quaternäre Salz in dem Dendritinhibitor in folgender Menge vorhanden ist:

| | |
|---|---|
| Methyldodezylmorpholinbromid | $1 \times 10^{-4}$ Mol/l bis $1 \times 10^{-2}$ Mol/l |
| Methyldezylmorpholinbromid | $1 \times 10^{-3}$ Mol/l bis $5 \times 10^{-2}$ Mol/l |
| Trimethyldodezylammonium bromid | $1 \times 10^{-3}$ Mol/l bis $1 \times 10^{-2}$ Mol/l |
| Trimethyldezylammoniumbromid | $1 \times 10^{-3}$ Mol/l bis $5 \times 10^{-2}$ Mol/l |
| Dimethylbenzyldodezylammoniumbromid | $1 \times 10^{-5}$ Mol/l bis $1 \times 10^{-4}$ Mol/l |
| Dimethylbenzyldezylammoniumbromid | $1 \times 10^{-5}$ Mol/l bis $1 \times 10^{-4}$ Mol/l |
| Tetrabutylammoniumbromid | $1 \times 10^{-3}$ Mol/l bis $3 \times 10^{-2}$ Mol/l |
| Tributylbenzylammoniumbromid | $5 \times 10^{-5}$ Mol/l bis $1 \times 10^{-4}$ Mol/l |
| Dodezylpyridinbromid | Sättigungsmenge |
| Dezylpyridinbromid | Sättigungsmenge |
| Dodecylmethylpyrrolidinbromid | Sättigungsmenge |
| Dezylmethylpyrrolidinbromid | Sättigungsmenge |

4. Negativer Elektrolyt nach einem der vorangehenden Ansprüche, dadurch gekennzeichnet, daß der Dendritinhibitor Methyldodezylmorpholinbromid oder Methyldezylmorpholinbromid und $Sn^{2+}$ und $Pb^{2+}$ aufweist.

5. Negativer Elektrolyt nach einem der vorangehenden Ansprüche, dadurch gekennzeichnet, daß der Dendritinhibitor weiter ein Verbesserungsmittel für die elektrische Leitfähigkeit aufweist.

6. Negativer Elektrolyt nach Anspruch 5, dadurch gekennzeichnet, daß das Verbesserungsmittel der Leitfähigkeit mindestens eine der Substanzen Kaliumchlorid und Ammoniumchlorid enthält.

7. Negativer Elektrolyt nach einem der vorangehenden Ansprüche, dadurch gekennzeichnet, daß der Dendritinhibitor weniger als eine Sättigungsmenge von $Sn^{2+}$, von $1 \times 10^{-5}$ Mol/l bis weniger als eine Sättigungsmenge von $Pb^{2+}$ und von $1 \times 10^{-4}$ Mol/l bis $1 \times 10^{-2}$ Mol/l von Methyldodezylmorpholinbromid oder von $1 \times 10^{-3}$ Mol/l bis $5 \times 10^{-2}$ Mol/l von Methyldezylmorpholinbromid aufweist.

8. Negativer Elektrolyt nach Anspruch 7, dadurch gekennzeichnet, daß das Verbesserungsmittel der elektrischen Leitfähigkeit 3 Mol/l oder weniger von Kaliumchlorid und 4 Mol/l oder weniger von Ammoniumchlorid aufweist.

**Revendications**

1. Electrolyte négatif pour accumulateur zinc-brome à circulation d'électrolyte, comprenant un mélange de bromure de zinc, comme substance active, avec (a) un agent de complexation du brome comprenant au moins un des produits bromure de méthyléthylmorpholinium et bromure de méthyléthylpyrrolidinium et (b) un inhibiteur de dendrites, caractérisé en ce que ledit inhibiteur de dentrites comprend une combinaison (i) d'un sel de morpholinium, de pyridinium, de pyrrolidinium ou d'ammonium quaternaire comportant au moins un groupe butyle, décyle, dodécyle ou benzyle, et (ii) d'ions plomb divalents et (iii) d'ions étain divalents.

2. Electrolyte négatif selon la revendication 1, caractérisé en ce que ledit sel quaternaire que comporte l'inhibiteur de dendrites comprend du bromure de méthyldodécylmorphonilium, du bromure de méthyldécylmorphonilium, du bromure de triméthyldodécylammonium, du bromure de triméthyldécylammonium, du bromure de diméthylbenzyldodécylammonium, du bromure de diméthylbenzyldécylammonium, du bromure de tétrabutylammonium, du bromure de tributylbenzylammonium, du bromure de dodécylpyridinium, du bromure de décylpyridinium, du bromure de dodécylméthylpyrrolidinium ou du bromure de décylméthylpyrrolidinium.

3. Electrolyte négatif selon la revendication 2, caractérisé en ce que ledit sel quaternaire est présent dans ledit inhibiteur de dendrites en une quantité comme suit:

| | |
|---|---|
| Bromure de méthyldodécyl morpholinium | $1 \times 10^{-4}$ mole/l à $1 \times 10^{-2}$ mole/l |
| Bromure de méthyldécyl morpholinium | $1 \times 10^{-3}$ mole/l à $5 \times 10^{-2}$ mole/l |
| Bromure de triméthyldodécyl ammonium | $1 \times 10^{-3}$ mole/1 à $1 \times 10^{-2}$ mole/l |
| Bromure de triméthyldécyl ammonium | $1 \times 10^{-3}$ mole/1 à $5 \times 10^{-2}$ mole/l |
| Bromure de diméthylbenzyl-dodécylammonium | $1 \times 10^{-5}$ mole/1 à $1 \times 10^{-4}$ mol/l |
| Bromure de diméthylbenzyl décylammonium | $1 \times 10^{-5}$ mole/1 à $1 \times 10^{-4}$ mol/l |
| Bromure de tétrabutyl ammonium | $1 \times 10^{-3}$ mole/l à $3 \times 10^{-2}$ mole/l |
| Bromure de tributylbenzyl ammonium | $5 \times 10^{-5}$ mole/l à $1 \times 10^{-4}$ mole/l |
| Bromure de dodécylpyridinium | saturation |
| Bromure de décylpridinium | saturation |
| Bromure de dodécylméthyl pyrrolidinium | saturation |
| Bromure de décylméthyl porrolidinium | saturation |

4. Electrolyte négatif selon l'une quelconque des revendications précédentes, caractérisé en ce que l'inhibuteur de dendrites comprend du bromure de méthyldodécylmorpholinium ou du bromure de méthyldécylmorpholinium et $Sn^{2+}$ et $Pb^{2+}$.

5. Electrolyte négatif selon l'une quelconque des revendications précédentes, caractérisé en ce que l'inhibiteur de dendrites comprend en outre un agent améliorant la conductivité électrique.

6. Electrolyte négatif selon la revendication 5, caractérisé en ce que l'agent améliorant la conductivité comprend au moins une substance parmi le chlorure de potassium et le chlorure d'ammonium.

7. Electrolyte négatif selon l'une quelconque des revendications précédentes, caractérisé en ce que l'inhibiteur de dendrites comprend une quantité inférieure à la saturation de $Sn^{2+}$, de $1 \times 10^{-5}$ mole/l à une quantité inférieure à la saturation de $Pb^{2+}$ et de $1 \times 10^{-4}$ mole/l à $1 \times 10^{-2}$ mole/l de bromure de méthyldodécylmorpholinium ou de $1 \times 10^{-3}$ mole/l à $5 \times 10^{-2}$ mole/l de bromure de méthyldécylmorpholinium.

8. Electrolyte négatif selon la revendication 7, caractérisé en ce que l'agent améliorant la conductivité électrique comprend 3 moles/l, ou moins, de chlorure de potassium et 4 moles/l ou moins, de chlorure d'ammonium.

FIG. 1

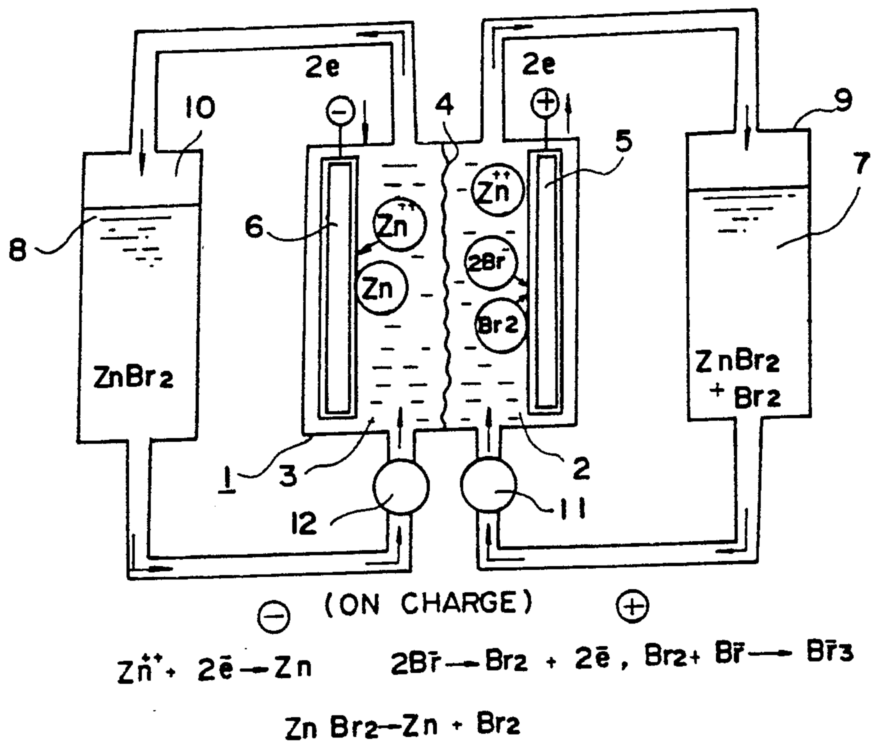
2e
2e
10
4
9
5
7
6
8
ZnBr2
ZnBr2
+ Br2
1
3
2
12
11
(ON CHARGE)
Zn⁺⁺ + 2ē → Zn
2Br⁻ → Br2 + 2ē , Br2 + Br⁻ → Br⁻3
Zn Br2 → Zn + Br2

FIG. 2

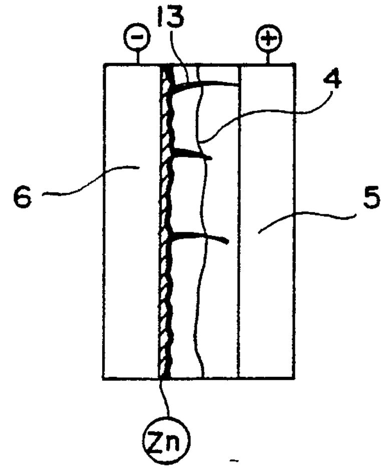
13
4
6
5
Zn

REFERENCE PHOTOGRAPHS

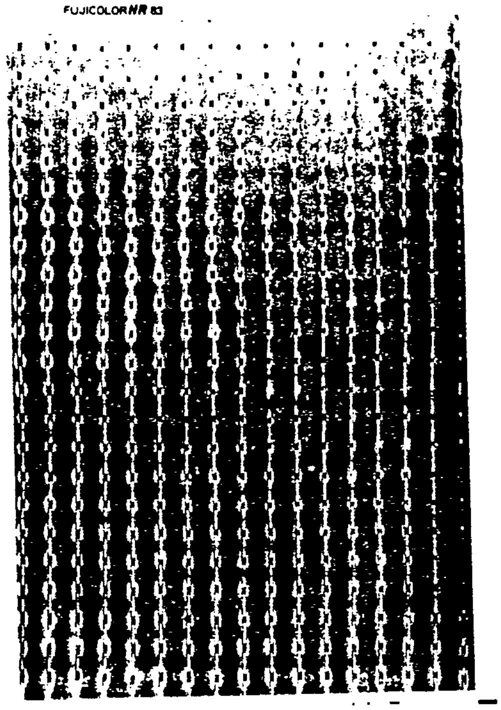

PHOTOGRAPH 1

(TEST NO.14-8)

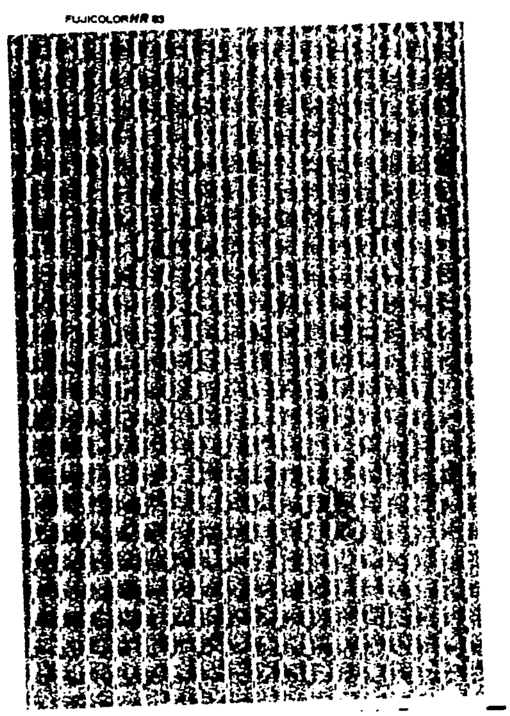

PHOTOGRAPH 2

(TEST NO.14-9)